Europäisches Patentamt

European Patent Office

Office européen des brevets

(11) Publication number: 0 365 163
A2

## EUROPEAN PATENT APPLICATION

(21) Application number: 89309934.1

(22) Date of filing: 29.09.89

(51) Int. Cl.⁵: B29D 11/00 , B29C 33/30

(30) Priority: 17.10.88 US 258904

(43) Date of publication of application:
25.04.90 Bulletin 90/17

(84) Designated Contracting States:
DE FR GB

(71) Applicant: CORNING INCORPORATED
Houghton Park
Corning New York 14831(US)

(72) Inventor: Buckley, Milford Leyland
213 Scott Lane
Horseheads New York(US)

(74) Representative: Boon, Graham Anthony et al
Elkington and Fife Beacon House 113
Kingsway
London, WC2B 6PP(GB)

(54) Method of producing moulds for organic polymer multifocal lenses.

(57) A method is disclosed for constructing a glass mould, and particularly the primary glass mould member, for use in casting multifocal, ophthalmic lenses from organic polymers. The method comprises pressing a glass segment (60) with a cavity (62), removing the base portion (66) of the segment to form a perforation, mounting the perforated segment (70) in a counter-sink (84) on a second glass body (82), and fusing the assembly to form a blank for finishing. For trifocal lenses, a composite, perforated segment (120) is formed and sealed in a counter-sink (132) to form a blank.

Fig. 8

EP 0 365 163 A2

# METHOD OF PRODUCING MOULDS FOR ORGANIC POLYMER MULTIFOCAL LENSES

This invention is concerned with moulding ophthalmic, multifocal lenses composed or an organic polymer. It is particularly concerned with an improved method of producing glass moulds for such purpose.

Traditionally, multifocal lenses have been produced in glass by fusing a small glass segment, or button, member of high lens power into a countersink or a larger lens blank, commonly referred to as the "major". This practice is described in detail in my pending application S.N. 116,152 filed November 3, 1987.

It is not practical to employ this procedure for organic polymer, multifocal lenses, since such lenses are moulded in a one-piece construction of a single material. Accordingly, it is customary to mould different surface curvatures in one surface of an organic polymer, multifocal lens. Usually, this is on the front surface as described herein. However, if necessary, the curvatures may be moulded on the back, or concave, surface of a lens.

Currently, organic lenses are produced by filling a cavity with a liquid monomer containing known poly merizing additives. The cavity may be formed by an assembly of two glass mould members held in spaced relationship by a flexible gasket.

The two mould members will have precisely reverse curvatures to the surface curvatures desired on the organic lens. As a result, the prescription power and surface finish quarlity of an onganic multifocal lens relies entirely on the finished accuracy of the glass mould members against which the lens is formed.

The primary glass mould member, against which the corrective front surface of an organic multifocal lens is formed, is a precision fused assembly of sub-assemblies. This provides the different curvatures required. Customarily, the glass mould members are of an ophthalmic quality, white crown glass, e.g. an alkali-lime-silicate, or alkali-zinc-silicate composition.

Production of the glass mould members is a very specialized, and hence expensive, operation that requires frequent inspections and measurements to achieve the necessary accuracy. Moreover, the polished glass mould members are very prone to damage. Therefore mould life is quite unpredicatable, and may vary from one or two castings to as many as a hundred. Hence, constant checking of mould surfaces is a necessity, as is maintaining a substantial inventory of mould members for replacement.

A purpose of the invention is to provide a novel and unique method of constructing a glass mould for use in producing organic polymer, multifocal lenses.

Another purpose is to provide a simpler and less expensive method of constructing a glass mould for producing organic polymer, multifocal lenses.

A particular purpose is to provide an improved method for constructing the primary mould member in a glass mould for producing organic polymer, multifocal lenses.

A further purpose is to provide a method of constructing such primary glass mould member wherein fewer surfacing operations on the glass are required.

My invention is a method of constructing a mould for producing organic polymer, multifocal, ophthalmic lenses which comprises pressing a glass segment with a cavity, the cavity having a wall at an angle up to about 15 degrees with the perpendicular and a base forming a web, removing the web to form an opening through the segment, forming a surface of curvature corresponding to that of a countersink formed in a major element, fusing the open segment to the major element in the countersink to form a composite, and removing sufficient of the composite to provide a contour that is the precise reverse of the desired contour of the organic lens.

The following United States Patents disclose related procedures designed for use in producing glass multifocal ophthalmic lenses:

Hammon No. 2,388,687 discloses forming a carrier portion having a moulded cavity, inserting two segment elements in the cavity, fusing the assembly to form a segment blank, surface finishing the blank for mounting in a countersink on a major lens element.

Lantz et al.No. 2,704,010 discloses inserting and fusing a button in a cavity of a barrier member, the carrier walls being slanted to allow proper grinding and polishing depth to be determined visually during lens finishing.

Newell No. 2,035,827 & Reh No. 2,112,659 disclose forming a composite button wherein a button is inserted and fused in a cavity or perforation in a carrier member while enclosed by refractory material.

Bausch No. 2,059,767 discloses a method in which a glass carrier member is thermally softened, and a button is pressed into the softened glass in a press mould to simultaneously form a cavity and insert a button therein.

FIGURE 1 is a cross-section view of a mould heretofore employed in producing organic polymer, bifocal lenses.

FIGURE 2 is a cross-section view of an organic polymer, bifocal lens cast in the mould of FIGURE 1.

FIGURE 3 is a cross-section view of a mould heretofore employed in producing organic polymer, trifocal lenses.

FIGURE 4 is a cross-section view of an organic polymer, trifocal lens cast in the mould of FIGURE 3.

FIGURE 5 is a cross-section view of an assembly heretofore employed in producing the primary glass mould element of FIGURE 1.

FIGURE 6 is a cross-section view of a cavity segment pressing in accordance with the present invention.

FIGURE 7 is a cross-section view of a perforated body prepared from the cavity segment pressing of FIGURE 6.

FIGURE 8 is a cross-section view of a mould blank assembly in accordance with the invention.

FIGURES 9a & 9b are cross-section views of two cavity segment pressings used in producing a mould for an organic polymer, trifocal lens.

FIGURES 10a & 10b are cross-section views of perforated bodies prepared from the cavity segment pressings of FIGURES 9a & 9b.

FIGURE 11 is a cross-section view of a composite cavity segment prepared from the perforated bodies of FIGURES 10a & 10b.

FIGURE 12 is a cross-section view of a perforated body prepared from the composite cavity segment of FIGURE 11.

FIGURE 13 is a cross-section view of the perforated body of FIGURE 12 mounted in a mould blank assembly preparatory to producing a mould for an organic polymer, trifocal lens.

FIGURE 14 is a cross-section view of a typical, single mould, glass pressing apparatus suitable for pressing the cavity segments of FIGURES 6, 9a & 9b.

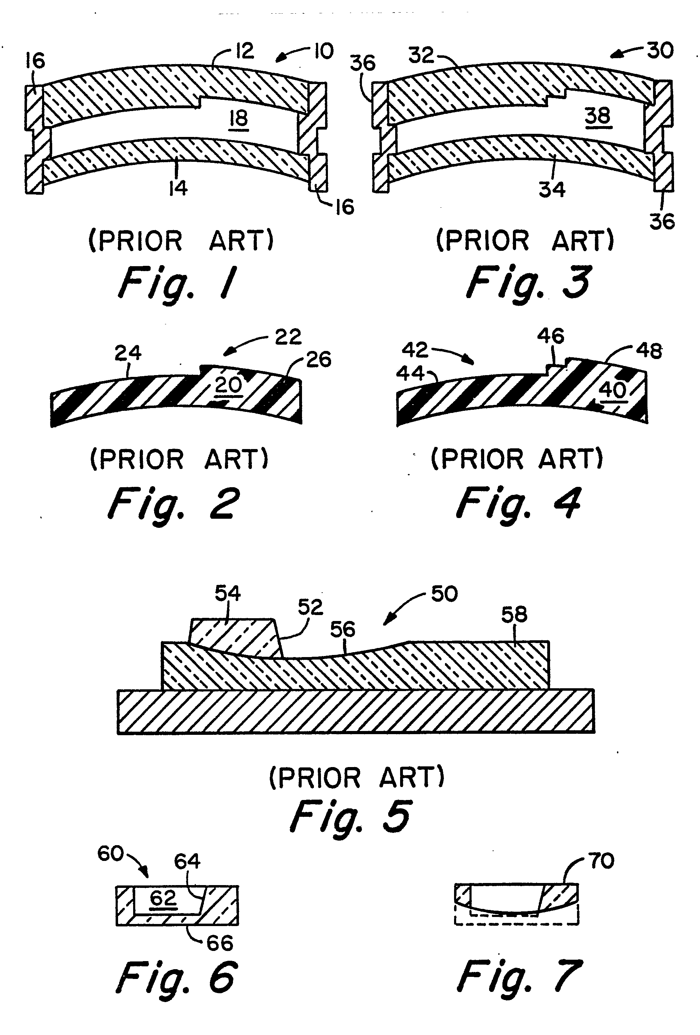

FIGURE 1 illustrates the current technique used in casting organic polymer lenses. Mould assembly 10 comprises two glass mould members 12 and 14 shown maintained in spaced relationship by a flexible gasket member 16 surrounding the spaced glass members. This provides a cavity 18 into which a liquid monomer mixture may be cast to cure. Primary mould member 12 is a fused glass element, very similar in construction to a glass bifocal lens, which imparts different curvatures to a lens member formed in cavity 18. Member 14 is a back convex spherical mould.

FIGURE 2 shows an organic lens member 20 as produced in assembly 10. The upper surface 22 is made up of a major, or far vision, curvature 24 and a bifocal, or reading, curvature 26. These curvatures are imparted by, and hence are the reverse of, curvatures formed on the inner face of glass mould member 12.

FIGURE 3 shows a mould assembly 30 comprising two glass mould members 32 and 34 maintained in spaced relationship by gasket 36 to provide cavity 38. Assembly 30 corresponds to assembly 10 of FIGURE 1, except that primary mould member 32 has a surface contour designed for moulding a trifocal lens rather than a bifocal lens.

FIGURE 4 shows a trifocal, organic polymer lens 40 produced in the same manner as bifocal lens 20, but having an upper surface 42 composed of a major element curvature 44 and two segment curvatures 46 and 48. It will be appreciated that a suitably contoured upper glass mould member, as shown at 32 in FIGURE 3, is required for moulding lens 40.

FIGURE 5 shows a typical assembly 50 in the production of a fused glass mould element such as shown at 12 in FIGURE 1. Initially, a segment or button member is moulded, as for a glass bifocal lens. Then, a flat edge of such member is ground away at an angle of 10-15 degrees, as shown at 52, to permit ultimate release of a cast organic lens. This produces segment member 54 which is mounted for fusion in a countersink 56 formed in a glass major element 58. The assembly is now subjected to a heat treatment to fuse segment 54 to major element 58.

This procedure is generally similar to that described for glass lens production in my pending application, and reference is made to that application for further details. It may be noted, however, that the finished surfaces on countersink 56 and wall 52 are in the desired final condition at this point. Therefore, this procedure requires that great care be taken to protect those surfaces during further operations.

The fused assembly is then top-side ground and polished to remove sufficient glass to provide a contour surface that is the precise reverse of that desired on the organic lens to be cast thereagainst.

It will be appreciated the production of a mould segment for a trifocal lens requires that the foregoing process be carried out in duplicate. A major complication involves adequately protecting the initially prepared surfaces while carrying out the second fusion and finishing steps.

My present invention is characterized by a unique method of preparing a glass segment member to be fused in the countersink of a major element to form the primary member of a glass mould. Basically, this method involves pressing a segment member having a cavity extending partially through the pressed member from the upper surface. This forms a web portion on the underside of the cavity pressing.

FIGURE 6 shows, in cross-section, a pressed segment 60 adapted to use, in accordance with the invention, in producing a primary mould member for moulding an organic polymer lens. Pressed segment 60 has a cavity 62 moulded therein that extends part way through the segment. This forms a wall 64 which slants outwardly at an angle of 10-15 degrees with the vertical to facilitate removal of an organic lens from the ultimate mould.

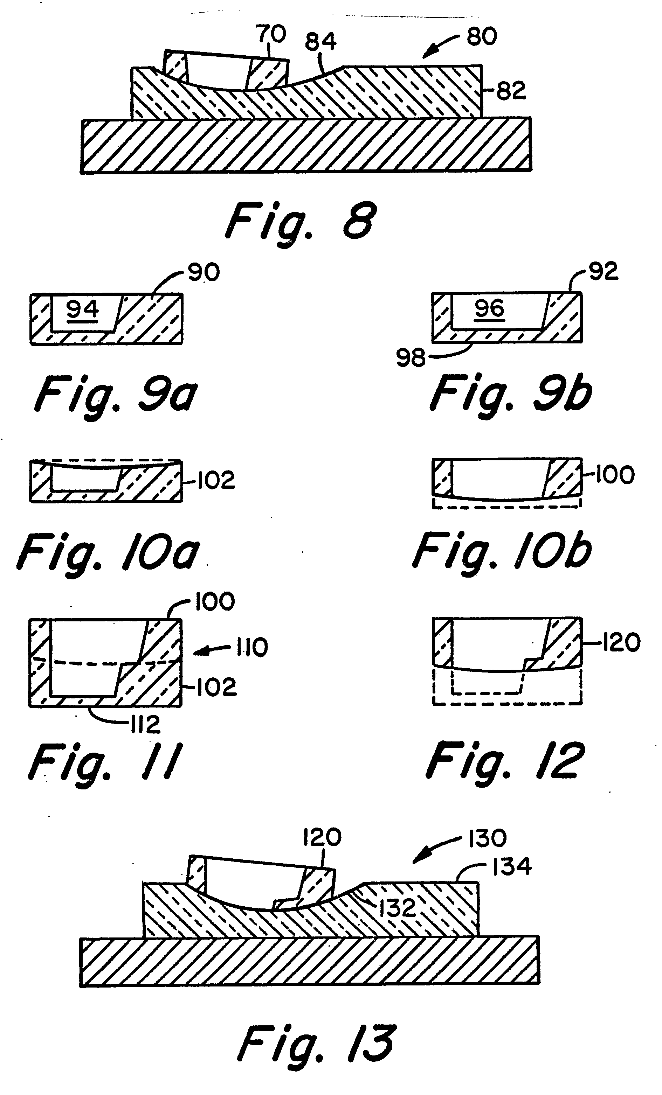

Pressed segment 60 has a web 66 forming the base of cavity 62. Web 66 is removed, as by grinding to a predetermined curvature as shown in FIGURE 7. This forms a perforated body 70 adapted to sealing in a countersink on a major element. Normally, perforated body 70 will have a convex curvature designed to match a concave curvature on a countersink, as shown in FIGURE 8.

The web is preferably removed using a full-face, diamond lap of 650-750 mesh for polishing. This avoids damage to the side wall 64 during the grinding. Otherwise, a protective filler, e.g. an epoxy-metal or a pitch-wax composition, must be used.

FIGURE 8 shows a mould blank assembly 80, in accordance with the invention, preparatory for fusion heat treatment. Major element 82 has a countersink 84 formed in its upper surface. Segment 70, prepared as shown in FIGURE 7, is placed in countersink 84 with suitable support pins in accordance with glass bifocal fusion practice. Following fusion at 710 - 725 degrees C, preferably 710-715 degrees C, blank 80 is cooled and the cavity is segment 70 is filled with a protective filler. This prepares the blank for top-side grinding to the desired major curve for the distance power curve for a major element. Thereafter, the filler is removed to provide a glass mould member as shown at 12 in FIGURE 1.

In preparing a primary glass mould member for an organic polymer, trifocal lens, two segment cavity pressings 90 and 92, as shown in FIGURES 9a & 9b, are pressed. These pressings are similar to pressing 60 of FIGURE 6 in all respects, except for the size of cavities 94 and 96. It will be observed that the lateral dimension of 94 is somewhat smaller than that of cavity 62, and the lateral dimension of cavity 96 is somewhat larger. The purpose for this will become apparent shortly.

Pressing 92 has a web portion 98 which is removed to form a perforated body 100, as shown in FIGURE 10b. This body is similar to perforated body 70 of FIGURE 7. However, rather than being sealed in a countersink, as in FIGURE 8, it is fused to a body 102, as shown in FIGURE 10a. Body 102 is prepared from pressed segment 90 by grinding and polishing the upper surface thereof to a concave curvature which is a complement of the concave curve formed on body 100. Perforated body 100 is mounted atop body 102, and the two bodies fused along their complementary curvatures to form a composite 110, as shown in FIGURE 11.

Thereafter, most of composite 110, including webbed portion 112, is removed to provide a perforated body 120, as shown in FIGURE 12. Perforated body 120 is then mounted in countersink 132 of major element 134, as shown in assembly 130 of FIGURE 13, preparatory to fusion sealing, as described with reference to bifocal assembly 80. The fused assembly is then topside finished to provide a primary glass mould member as shown by numeral 32 in FIGURE 3.

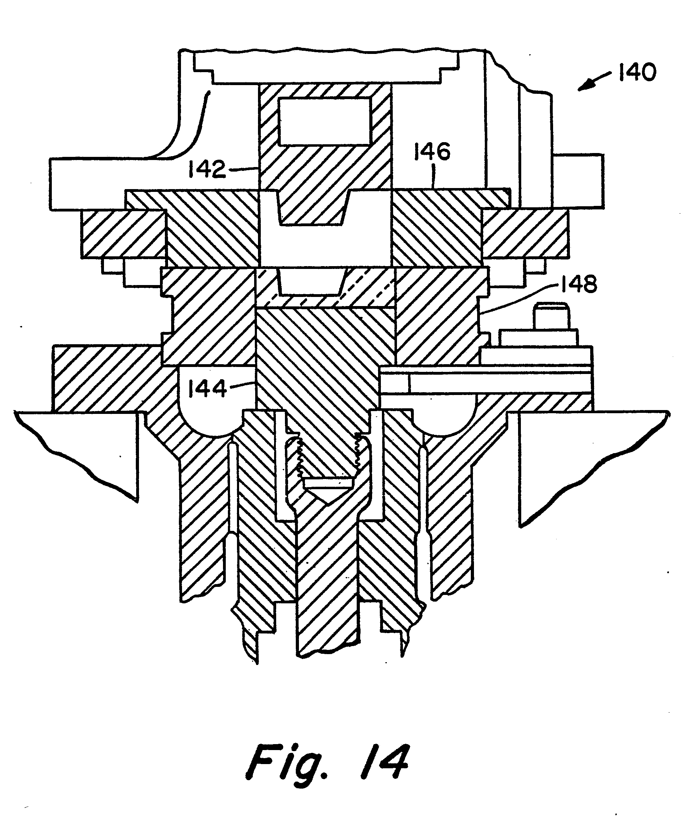

Each of cavity segments 60, 90 and 92 may be pressed from a molten gob of suitable glass in a typical four-piece mould set 140, as illustrated in FIGURE 14. Mold set 140 may include a pressing ram 142, a preset valve tool 144 and ring members 146 and 148.

Pressing ram 142 forms a cavity segment, such as segment 60, from a gob of molten glass. It may be formed from a perlitic annealed steel having highly polished surfaces. This imparts correspondingly polished quality to the vertical walls 64 of the cavity such as 62. The cavity walls are required to have a roughness height (RMS) of no more than 10 micro inches, and preferably no more than 5, as measured with a Type FL tracer profilometer. Valve tool 144 may be ductile cast iron, and ring members 146 and 148 may be hardened tool steel.

My invention greatly reduces the degree of skill and care required in production of the primary glass mould member used in moulding organic polymer, multifocal lenses. It is of particular value in trifocal mould production, since formation of the second reading section is a much simpler and less risky procedure than heretofore. Further, the invention permits formation of virtually any reading segment style desired in an organic polymer lens, whereas prior methods were limited to the straight-top or D-style segment. A further benefit arises from the ability to produce prismatic reading segments by using the side wall of the cavity pressing surrounding the countersink with crown glass as a filler for shifting optical centers.

## Claims

1. A method of forming a primary, glass mould member to produce organic polymer, multifocal, ophthalmic lenses which comprises pressing a glass segment with a cavity, the cavity having an outwardly slanting, vertical wall and a base forming a web, and removing the web to form a perforated segment having a predetermined convex surface of curvature corresponding to the concave curvature of a body to which the perforated segment is fused.

2. A method in accordance with claim 1 wherein the vertical wall of the cavity slants outwardly from the perpendicular at an angle of about 10-15 degrees.

3. A method in accordance with claim 1 wherein the perforated cavity segment has a convex curvature formed thereon that corresponds to a concave curvature on a second glass body, and the perforated cavity segment is fusion sealed to the second glass body to form a composite body.

4. A method in accordance with claim 3 wherein the second glass body, to which the perforated cavity segment is sealed, is a major element having a countersink with a concave curvature matching that of the perforated body.

5. A method in accordance with claim 4 wherein the composite body is surface finished to a curvature that is the reverse of that desired on an organic polymer lens.

6. A method in accordance with claim 3 wherein the glass body to which the perforated cavity segment is sealed is a second pressed cavity segment having a concave upper surface the curvature of which corresponds to the convex curvature of the perforated body.

7. A method in accordance with claim 6 wherein the second glass body of the composite has a web portion that is removed to form a perforated composite, the surface is finished to the reverse curvature of a countersink in a major element, and the composite is sealed in said countersink.

(PRIOR ART)

Fig. 1

(PRIOR ART)

Fig. 3

(PRIOR ART)

Fig. 2

(PRIOR ART)

Fig. 4

(PRIOR ART)

Fig. 5

Fig. 6

Fig. 7

70  84  80

82

*Fig. 8*

90

94

*Fig. 9a*

92

96

98

*Fig. 9b*

102

*Fig. 10a*

100

*Fig. 10b*

100

110

102

112

*Fig. 11*

120

*Fig. 12*

120  130

134

132

*Fig. 13*

Fig. 14